Europäisches Patentamt

European Patent Office

Office européen des brevets

(19)

(11) Veröffentlichungsnummer: **0 126 509**
**B1**

(12) **EUROPÄISCHE PATENTSCHRIFT**

(45) Veröffentlichungstag der Patentschrift: **08.08.90**

(51) Int. Cl.⁵: **G 02 B 6/44**

(21) Anmeldenummer: **84200684.3**

(22) Anmeldetag: **14.05.84**

(54) Optisches Kabelelement bzw. Kabel und Verfahren zu seiner Herstellung.

(30) Priorität: **19.05.83 DE 3318233**

(43) Veröffentlichungstag der Anmeldung:
**28.11.84 Patentblatt 84/48**

(45) Bekanntmachung des Hinweises auf die
Patenterteilung:
**08.08.90 Patentblatt 90/32**

(84) Benannte Vertragsstaaten:
**DE FR GB IT NL**

(56) Entgegenhaltungen:
DE-A-2 302 662
DE-A-2 533 144
DE-A-2 825 845
FR-A-2 282 648
FR-A-2 294 460
FR-A-2 296 192
GB-A-1 445 732
GB-A-1 584 248

(73) Patentinhaber: **Philips Patentverwaltung GmbH**
**Wendenstrasse 35 Postfach 10 51 49**
**D-2000 Hamburg 1 (DE)**
(84) **DE**

(73) Patentinhaber: **N.V. Philips'**
**Gloeilampenfabrieken**
**Groenewoudseweg 1**
**NL-5621 BA Eindhoven (NL)**
(84) **FR GB IT NL**

(72) Erfinder: **Ditscheid, Hans-Leo**
**Am Birkenbusch 1**
**D-5060 Bergisch Gladbach (DE)**
Erfinder: **Burger, Walter**
**Kölner Strasse 516**
**D-5067 Kürten-Herweg (DE)**

(74) Vertreter: **Meier, Friedrich, Dipl.-Ing. et al**
**Philips Patentverwaltung GmbH Wendenstrasse**
**35 Postfach 10 51 49**
**D-2000 Hamburg 1 (DE)**

Courier Press, Leamington Spa, England.

**Beschreibung**

Die Erfindung bezieht sich auf eine optisches Kabelelement mit einer Hülle, in der ausschließlich mindestens ein Lichtwellenleiter (LWL) und im wesentlichen parallel zum LWL verlaufende zugfeste Fasern verlaufen.

Die Erfindung betrifft ferner ein optisches Kabel mit einem derartigen Kabelelement sowie ein Verfahren zur Herstellung eines optischen Kabelelements, bei welchen um mindestens einen LWL und dazu im wesentlichen parallel verlaufende zugfeste Fasern eine Hülle extrudiert wird.

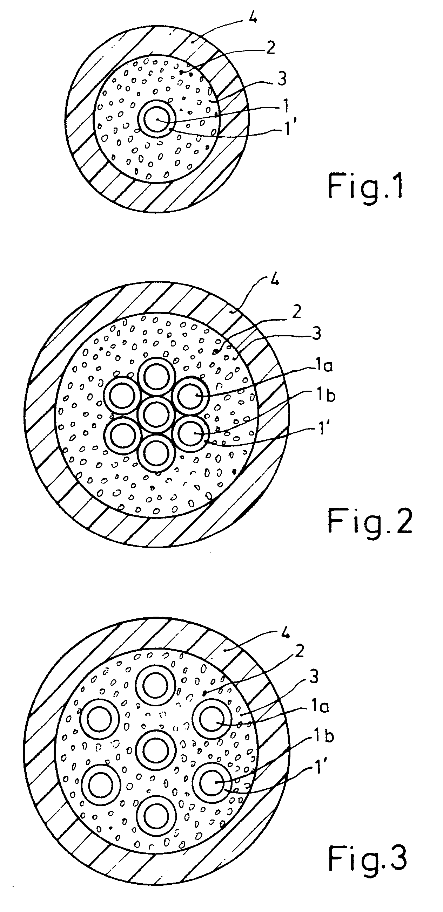

Bei einem durch Fig. 3 der US—PS 40 82 423 bekannten optischen Kabelelement sind die Lichtwellenleiter z.B. von einer gemeinsamen ersten Kunststoffschicht umgeben, auf der die zugfesten Fasern angeordnet sind, die ihrerseits von weiteren gemeinsamen Hüllen umgeben sind. Die Zugentlastung dieses Kabelelements erfolgt durch die auf der ersten Kunststoffschicht angeordneten Fasern, während ein Ausknicken der Lichtwellenleiter infolge Kontraktion in erster Linie durch die erste Kunststoffschicht selbst verhindert wird, die jedoch durch ihre relativ große Dicke die Flexibilität des Kabelelements herabsetzt.

Kabelelemente der eingangs genannten Art sind durch die GB—A 14 45 732 oder die FR—A 22 96 192 bekannt. Dort verlaufen Lichtwellenleiter und Zugentlastungsfasern im wesentlichen parallel zueinander als Bündel in einer extrudierten Hülle. Es sind keine Maßnahmen vorgesehen, durch welche die schädlichen Auswirkungen von Kontraktionskräften von den Lichtwellenleitern ferngehalten werden könnten. Im Falle der GB—A 14 45 732 sind die Zugentlastungsfasern mehr als dreifach dicker als die Lichtwellenleiter, gegenüber welchen sie dann als steife Gebilde wirken. Im Falle der FR—A 22 96 192 werden verseilte und litzenförmige Fasern als Verstärkungsglieder empfohlen, welche ebenfalls relativ steif sind.

In der GB—A 15 84 248 ist ein optisches Kabelelement beschrieben, bei welchem in einer Hülle ein sowohl Lichtwellenleiter als auch Zugentlastungsfasern aufweisendes Bündel lose verläuft. Wie die Lichtwellenleiter relativ zu den Zugentlastungselementen angeordnet sind, ist nicht beschrieben.

Aufgabe der Erfindung ist es, ein optisches Kabelelement zu schaffen, das sowohl Zug- als auch Kontraktionskräfte ohne nennenswerte Beeinträchtigung der optischen Übertragungseigenschaften der Lichtwellenleiter aufnehmen kann, und das gleichwohl einfacher im Aufbau und darüber hinaus hochflexibel ist.

Diese Aufgabe wird erfindungsgemäß dadurch gelöst, daß (a) der/die LWL und die ihn/sie einbettenden zugfesten Fasern den Innenquerschnitt der Hülle zu 50 bis 90% ausfüllen und die Einbettung des/der LWL in den fasern und der Fasern in der Hülle derart lose erfolgt, daß der/die LWL gegenüber den einbettenden Fasern und die Fasern in der Hülle radial relativ frei beweglich sind, daß (b) der Durchmesser der zugfesten Fasern derart bemessen sind, daß die freie Knicklänge des Bündels der zugfesten Fasern kleiner als die der Gesamtheit des/der in der Hülle verlaufenden LWL ist, und (c) daß die Querschnittsfläche der Gesamtheit der zugfesten Fasern wesentlich größer als die Querschnittsfläche der Gesamtheit des/der LWL ist.

Ein Verfahren der eingangs genannten Art ist dadurch gekennzeichnet, daß ein oder mehrere Lichtwellenleiter unverseilt und parallel verlaufend zusammen mit mehreren unverseilten und parallel verlaufenden Bündeln zugfester Fasern einem Extruder zugeführt werden, der diese Elemente mit einer konzentrischen Hülle derart lose umgibt, daß der/die LWL und die ihn/sie einbettenden zugfesten Fasern den freien Innenquerschnitt der Hülle zu so bis 90% aus füllen und daß der/die LWL gegenüber den einbettenden zugentlastenden Fasern und die Fasern in der Hülle radial relativ frei beweglich sind, wobei der Durchmesser der zugfesten Fasern derart gewählt ist, daß die freie Knicklänge des Bündels der zugfesten Fasern kleiner als die der Gesamtheit des/der in der Hülle verlaufenden LWL ist, und wobei die Querschnittsfläche der Gesamtheit der zugfesten Fasern wesentlich größer als die Querschnittsfläche der Gesamtheit des/der LWL gewählt wird.

Das optische Kabelelement besitzt somit einen einfachen und für seine Produktion vorteilhaften Aufbau, da es lediglich aus dem Lichtwellenleiter, den zugfesten Fasern und der gemeinsamen Hülle besteht. Da keine dicken Kunststoffzwischenschichten vorgesehen sind, besitzt das Kabelelement eine hohe Flexibilität. Am Kabelelement auftretende Zugkräfte werden von den zugfesten Fasern elastisch aufgenommen, deren Gesamtquerschnittsfläche z.B. bei gleichen mechanischen Eigenschaften zwischen Lichtwellenleitern und Fasern wesentlich größer ist als die Gesamtquerschnittsfläche aller Lichtwellenleiter im Kabelelement. Auftretende Zugkräfte können zusätzlich auch noch dadurch von dem Lichtwellenleiter ferngehalten werden, indem die zugfesten Fasern unter mechanischer Vorspannung in den Kabelverband eingebracht werden, so daß im Kabelendzustand der Lichtwellenleiter gegenüber den Fasern eine Überlänge besitzt.

Am Kabelelement angreifende Kontraktions- oder Biegekräfte können sich praktisch nicht auf die optischen Übertragungseigenschaften des Lichtwellenleiters auswirken, da sich dieser bei einer mechanischen Beanspruchung zwischen die zugfesten Fasern, in die er eingebettet ist, in radialer Richtung hindurchschieben, sich in ihnen also frei bewegen kann.

Werden im Innern der Hülle mehrere parallel zueinander verlaufende Lichtwellenleiter von den zugfesten Fasern eingebettet, so erhöht sich die Übertragungskapazität eines derartigen Kabelelementes entsprechend. Der einzelne Lichtwellenleiter kann zusätzlich noch jeweils eine dünne mit ihnen fest verbundene, sekundäre Schutzschicht tragen, z.B. aus Kunststoff, so daß sie noch widerstandsfähiger gegen mechanische Beanspruchungen, insbesondere durch benachbarte Fasern oder andere Lichtwellenleiter, sind, ohne die Flexibilität des Kabelelementes zu mindern.

Eine vorteilhafte Ausbildung der Erfindung liegt darin, daß die Lichtwellenleiter zusammen mit den zugfesten Fasern den lichten Querschnitt (Innenquerschnitt) der gemeinsamen Hülle nur zu 60% bis 70% ausfüllen.

Durch diese Maßnahme und dadurch, daß der Durchmesser der zugfesten Fasern so bemessen ist, daß die freie Knicklänge eines entsprechenden Faserbündels kleiner als 50% derjenigen aller verwendeten Lichtwellenleiter ist, wird erreicht, daß bei stärkeren Kontraktionen die Lichtwellenleiter von den ebenfalls ausknickenden Fasern seitlich ausgelenkt werden, was zur Ausbildung von schraubenlinienförmigen Verläufen wechselnder Richtung führt. Diese schraubenlinienförmige Auslenkung der Lichtwellenleiter verursacht nur geringe Stauch- und Biegekräfte und damit nur relativ niedrige Auflagedrucke auf der Innenwandung der Umhüllung. Darüber hinaus kann ein Lichtwellenleiter bei dieser Art der Auslenkung eine relativ starke Verkürzung z.B. der Hülle unbeschadet aufnehmen.

Kleinere freie Knicklänge im obigen Sinn bedeutet, daß bei axialen Stauchkräften die Fasern des Faserbündels früher als die Lichtwellenleiter ausgelenkt werden. Das Faserbündel wird somit früher aufgekorbt.

Die zugfesten Fasern bestehen vorteilhaft aus einem zugfesten Werkstoff, wie z.B. Textilglas, Aramid, Kohlenstoff oder Metall, dessen Elastizitätsmodul mit demjenigen der Lichtwellenleiter vergleichbar ist.

Die Hülle kann aus einem thermoplastischen oder aus einem vernetzten synthetischen Material bestehen, das gegebenenfalls mit anorganischen Materialien gefüllt bzw. vermischt ist. Diese Materialien sind relativ billig verglichen mit den sonst für solche Zwecke verwendeten Fluorpolymeren.

Zur Erhöhung des mechanischen Schutzes des Kabelelementes ist es vorteilhaft, die Hülle aus unterschiedlichen, konzentrisch zueinander angeordneten Schichten zu fertigen. Beispielsweise kann dabei eine innere, relativ harte Hüllenschicht aus einem synthetischen Material mit einem Material umhüllt sein, dessen Elastizitätsmodul kleiner als 50% desjenigen der inneren Hüllenschicht ist. Hierzu verwendet man für die innere Hüllenschicht einen festen, schrumpfarmen synthetischen Werkstoff wie Polypropylen, Polyamid oder Polyvinylidenfluorid, während zur Verbesserung der Handhabbarkeit bzw. zur Verringerung der Federsteife des Kabels diese innere stauchfeste Hüllenschicht zweckmäßigerweise mit einer dickerwandigen zweiten Hüllenschicht eines weicheren Werkstoffes, wie z.B. Weich-PVC, umgeben ist.

Bei Verwendung des optischen Kabelelementes als vollwertiges optisches Kabel ist es vorteilhaft, dieses Kabelelement zusätzlich mit einer Außenumhüllung zu umgeben, die etwa aus metallisch leitendem Material, wie z.B. aus einem oder mehreren geschlossenen Metallzylindern, besteht. Diese Außenumhüllung kann u.a. sowohl mechanischen Schutz- als auch Abschirmungszwecken dienen.

Nach einer vorteilhaften Ausbildung der Erfindung besteht die Außenumhüllung für das Kabelelement aus metallischen Leitern in Form von Litzen oder Drähten, die blank oder gegeneinander isoliert sind, und die die Hülle in Form eines Geflechtes konzentrisch umgeben.

Bei Verwendung des optischen Kabelelementes als Kabel sowie als Teil eines komplexeren Verbundkabels kann es erforderlich sein, neben den optischen auch elektrische Funktionen bzw. Leitungen gleichzeitig zu realisieren. In einem solchen Fall ist es nicht zweckmäßig, die Leitungen mit in die Umhüllung des einzelnen Kabelelementes einzubeziehen. Vorteilhafter ist es, die elektrisch leitenden Elemente konzentrisch um die Hülle des Kabelelementes herum anzuordnen. Auf diese Weise wird zusätzlich einer möglichen Kontraktion des optischen Kabelelementes wirkungsvoll entgegengewirkt.

Die Außenumhüllung kann auch aus einem Flechtwerk nichtmetallischer Fäden oder Fasern bestehen.

Bei einem Kabel besteht die Außenumhüllung vorteilhaft aus zwei konzentrischen Teilhüllen, von denen die innere aus nichtmetallischem Werkstoff besteht, dessen Elastizitätsmodul sehr viel größer ist als derjenige der Hülle und der äußeren Teilhülle. Beispielsweise kann das Material der inneren Teilhülle aus einem Glasfasser-Kunststoff-Verbund (GFK), einem Kohlenstoff-Kunststoff-Verbund (CFK) oder aus einem Aramid (Kevlar)-FaserHarz-Verbund bestehen, wobei die innere Teilhülle als in sich geschlossenes Rohr oder aus mehreren zylindrischen Stäben aufgebaut ist.

In speziellen Anwendungsfällen treten bei Kabeln Forderungen nach hoher Querdruck- oder Schubsteifigkeit auf. Um diesen Anforderungen gerecht zu werden, wird erfindungsgemäß eine aus drei konzentrischen Hüllen (Hülle, innere und äußere Teilhülle) bestehende Kabelkonstruktion vorgeschlagen, die durch die Verwendung des optischen Kabelelementes in nur einem einzigen Arbeitsgang herstellbar ist. Die hohe Querdruck- und Schubsteifigkeit wird durch die Verwendung eines Verbundes aus hochzugfesten Fasern und eines Bindemittels, z.B. eines Polyesterharzes, in das diese Zugfasern matrixartig eingelagert sind, erzielt (innere Teilhülle).

Zur Herstellung der Kabelkonstruktion in nur einem Arbeitsgang wird das aus Lichtwellenleitern, zugfesten Fasern und Hülle bestehende optische Kabelelement nach Verlassen des ersten Extruders unmittelbar vor dem Einlauf in einem zweiten (Mantel-)Extruder konzentrisch mit parallel verlaufenden und mit einem Reaktionsharz getränkten hochzugfesten Fasern, ähnlich derjenigen innerhalb der Hülle des Kabelelementes, umgeben. Diese innere Teilhülle wird dann anschließend konzentrisch mit einer äußeren Teilhülle versehen, die bereits einen Teil der erforderlichen Reaktionswärme liefert. Die gegebenenfalls erforderliche Verdichtung der Faser-Harz-Konstruktion (innere Teilhülle) erfolgt dann zweckmäßig in einem nachfolgenden Druckrohr analog zur bekannten kontinuierlichen Vulkanisierungstechnik. Das Aufbringen der erforderlichen (Rest-)-Reaktionswärme in einem weiteren Arbeitsgang ist möglich.

Relativbewegungen zwischen den aus mehreren Hüllen bzw. Teilhüllen bestehenden Mantelkonstruktionen lassen sich dadurch verhindern, daß zwischen den Teilhüllen bzw. zwischen ihnen und der Hülle ein Flechtwerk aus nichtmetallischen Fäden oder Fasern angeordnet ist, in die sich die Hüllen bzw. Teilhüllen verhaken.

Die Zeichnung zeigt Ausführungsbeispiele der Erfindung. Es zeigen:

Fig. 1 einen Querschnitt eines optischen Kabelelementes mit nur einem Lichtwellenleiter,

Fig. 2 einen Querschnitt eines optischen Kabelelementes mit mehreren Lichtwellenleitern,

Fig. 3 einen Querschnitt eines weiteren optischen Kabelelementes mit mehreren Lichtwellenleitern,

Fig. 4 einen Querschnitt eines optischen Kabels mit einem in Fig. 1 dargestellten optischen Kabelelement und

Fig. 5 eine Vorrichtung zur Herstellung des optischen Kabelelementes bzw. des optischen Kabels.

Das optische Kabelelement besteht aus einem in seinem Zentrum verlaufenden Lichtwellenleiter (LWL) 1, der von einem "primär-coating" 1', z.B. einer Kunststoffschicht, die schon bei der Fertigung des Lichtwellenleiters auf diesen aufgebracht wird, umgeben ist. Unter LWL ist hier ein Faserelement zur Übertragung optischer Strahlung zu verstehen, die auch außerhalb des Bereiches der sichtbaren Strahlung liegen kann.

Der LWL 1 ist von zugfesten Fasern 2 umgeben, zwischen denen freie Zwischenräume 3 existieren. Die Fasern 2 sind von einer gemeinsamen Hülle 4 umgeben, die als Außenmantel des optischen Kabelelementes dient.

Die zugfesten Fasern 2, die z.B. aus Textilglas, Aramid, Kohlenstoff, Metall oder aus einem anderen geeigneten Material, z.B. einem Material mit ähnlichen mechanischen Eigenschaften wie die des LWL, bestehen können, dienen dazu, auf das optische Kabelelement wirkende Zugkräfte aufzufangen, damit diese nicht auf den Lichtwellenleiter übertragen werden. Besitzen der LWL und die Fasern gleiche mechanische Eigenschaften, so ist hierzu die Querschnittsfläche aller Fasern 2 wesentlich größer zu wählen als die des Lichtwellenleiters 1. Da sowohl die Fasern 2 untereinander als auch zum LWL 1 parallel liegen und die Zugfasern 2 unter etwas größerer Vorspannung bei der Fertigung des Kabelelementes eingebracht sind, so daß der LWL 1 im fertigen Zustand des Kabelelementes eine Überlänge gegenüber den Fasern 2 besitzt, ist gewährleistet, daß bei einer Zugbeanspruchung des Kabelelementes der LWL 1 praktisch nicht auf Zug beansprucht wird.

Der LWL 1 ist nur von zugfesten Fasern 2 umgeben, die den von der zylindrischen Hülle 4 gebildeten Hohlraum nur zu 50 bis 90% ausfüllen. Wirken auf die Zugfasern 2 und den Lichtwellenleiter 1 Stauch- oder Biegekräfte, z.B. infolge einer Kontraktion oder Biegung der Hülle 4, so durchdringt der Lichtwellenleiter 1 das Bündel der Zugfasern 2, in die er eingebettet ist, wobei er sich schraubenlinienförmig ausbiegt. Die Zugfasern 2 werden dazu nach Anzahl und Einzelfaserquerschnitt so bemessen, daß sie bereits infolge sehr kleiner Stauch- bzw. Biegekräfte ausknicken.

Nach Maßgabe des Füllfaktors von Zugfasern 2 und Lichtwellenleiter 1 in der gemeinsamen Hülle 4 üben die Zugfasern 2 beim Auftreten von Stauch- oder Biegekräften auf den LWL 1 seitlich wirkende Kräfte aus, die die schraubenlinienförmige Auslenkung des LWL 1 bewirken. Damit tritt ein dämpfungserhöhender Klemmeffekt, der zu microbending-Zusatzverlusten führt, nicht auf.

Die Fig. 2 und 3 zeigen Querschnitte von optischen Kabelelementen, die entsprechend dem in Fig. 1 aufgebaut sind, die in ihrem Innern jedoch mehrere parallel zueinander (unverseilte) und parallel zu den Fasern 2 verlaufende Lichtwellenleiter 1a, 1b aufweisen, die ebenfalls mit einem "primär-coating" 1' versehen sind. In Fig. 2 liegen die LWL 1 im Zentrum des Kabelelementes und eng aneinander, während sie nach Fig. 3 über die Querschnittsfläche innerhalb der Hülle 4 verteilt sind. Auch hier sind die LWL 1 von den Fasern 2 eingebettet, so daß sie praktisch im Faserverband "schwimmen". Fasern 2 und LWL 1 füllen ebenfalls nur einen Teil des Innenquerschnittes der Hülle 4 aus.

Zum weiteren Schutz der LWL 1 gegeneinander oder gegenüber den Fasern 2 können diese mit einem sogenannten "secundär-coating", also einer dünnen Kunststoffschicht, versehen sein.

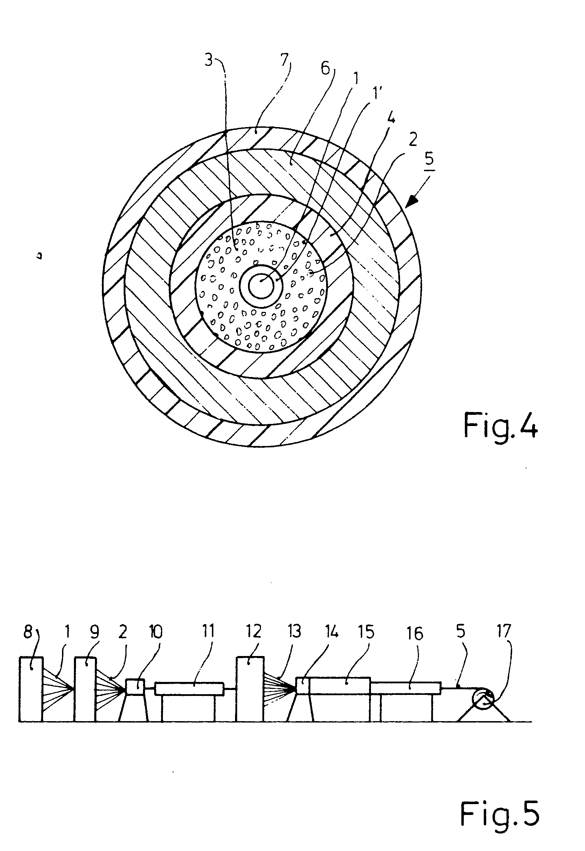

In der Fig. 4 ist ein optisches Kabel 5 dargestellt, das als Grundelement das optische Kabelelement nach Fig. 1 hat. Das Kabelelement ist von einer weiteren Außenumhüllung umgeben, die aus einer inneren Teilhülle 6 und einer äußeren Teilhülle 7 besteht. Die innere Teilhülle 6 besteht dabei aus einem Faser-Harz-Verbund, wodurch ein Kabel mit hoher Stauchfestigkeit bzw. Schubsteifigkeit und Querdrucksteifigkeit entsteht. Die äußere Teilhülle 7 kann z.B. aus einem anderen geeigneten, weicheren Kunststoff bestehen.

Das optische Kabel 5 kann auch Kabelelemente besitzen, die nach den Fig. 2 und 3 aufgebaut sind. Darüber hinaus ist es auch möglich, optische Kabel zu schaffen, bei denen mehrere Kabelelemente nach den Fig. 1 bis 3 von einer gemeinsamen Außenumhüllung umgeben sind.

Anhand der Fig. 5 wird das Verfahren zur Herstellung des optischen Kabelelementes bzw. des optischen Kabels in nur einem Arbeitsgang näher erläutert.

In einem Ablaufgestell 8 sind die Vorratsbehälter mit den LWL 1 untergebracht, die systematisch sortiert und parallel verlaufend in das Ablaufgestell 9 einmünden, in dem die zugfesten Fasern 2 bevorratet werden. Diese bilden die allseitige Einbettung für die LWL 1 und laufen gestreckt sowie parallel zu den Lichtwellenleitern und unverseilt in der Spritzkopf eines ersten Extruders 10, der sie dort mit der Hülle 4 umspritzt, und zwar so lose, daß der Innenquerschnitt der Hülle 4 von den Fasern 2 und den LWL 1 nur zum Teil ausgefüllt ist.

Nach Verlassen des Kühlaggregates 11 tritt das Kabelelement in das Ablaufgestell 12 ein, aus dem weitere zugfeste Fasern 13 oder Fäden, die mit einem geeigneten Bindemittel getränkt sind, ablaufen und die die Hülle 4 als innere Teilhülle 6 umschließen. Diese wird anschließend vom Spritzkopf eines zweiten Extruders 14 mit der äußeren Teilhülle 7 umgeben. Die Wärme des Hüllenmaterials der äußeren Teilhülle 7 zusammen mit der in dem Reaktionsgerät 15 aufgebrachten Wärme führt zum Aushärten des Bindemittels. Falls erforderlich, kann in dem Reaktionsgerät 15 ein Kompressionsdruck erzeugt werden, wodurch der aus Fasern 13 und Bindemittel bestehende Verbund der inneren Teilhülle 6 verdichtet wird. Das so erzeugte optische Kabel 5 durchläuft dann ein zweites Kühlaggregat 16, in dem es so weit abgekühlt wird, daß es auf einer Trommel 17 aufgewickelt werden kann.

## Patentansprüche

1. Optisches Kabelelement mit einer Hülle (4), in der ausschließlich mindestens ein Lichtwellenleiter (LWL) (1, 1a, 1b) und im wesentlichen parallel zum LWL (1, 1a, 1b) verlaufende zugfeste Fasern (2) verlaufen dadurch gekennzeichnet, daß (a) der/die LWL (1, 1a, 1b) und die ihn/sie einbettenden zugfesten Fasern (2) den Innenquerschnitt der Hülle (4) zu 50 bis 90% ausfüllen, und die Einbettung des/der LWL in des Fasern und der Fasern in der Hülle derart lose erfolgt, daß der/die LWL (1, 1a, 1b) gegenüber den einbettenden Fasern (2) und die Fasern (2) in der Hülle (4) radial relativ frei beweglich sind, (b) der Durchmesser der zugfesten Fasern (2) derart bemessen ist, daß die freie Knicklänge des Bündels der zugfesten Fasern (2) kleiner als die der Gesamtheit des/der in der Hülle (4) verlaufenden LWL (1, 1a, 1b) ist, und (c) die Querschnittsfläche der Gesamtheit der zugfesten Fasern (2) wesentlich größer als die Querschnittsfläche der Gesamtheit des/der LWL (1, 1a, 1b) ist.

2. Optisches Kabelelement nach Anspruch 1, dadurch gekennzeichnet, daß die einzelnen Lichtwellenleiter (1, 1a, 1b) zusätzlich jeweils eine dünne, mit ihnen fest verbundene, sekundäre Schutzschicht tragen.

3. Optisches Kabelelement nach Anspruch 1 oder 2, dadurch gekennzeichnet, daß die freie Knicklänge des Bündels der zugfesten Fasern (2) kleiner als 50% derjenigen aller verwendeten Lichtwellenleiter (1, 1a, 1b) ist.

4. Optisches Kabelelement nach einem oder mehreren der Ansprüche 1 bis 3, dadurch gekennzeichnet, daß die zugfesten Fasern (2) aus Textilglas, Aramid, Kohlenstoff oder Metall bestehen.

5. Optisches Kabelelement nach einem oder mehreren der Ansprüche 1 bis 4, dadurch gekennzeichnet, daß die Hülle (4) aus unterschiedlichen, konzentrisch zueinander angeordneten Schichten besteht.

6. Optisches Kabelelement nach Anspruch 5, dadurch gekennzeichnet, daß eine innere harte Hülle aus einem synthetischen Material mit einem Material umhüllt ist, dessen Elastizitätsmodul kleiner als 50% desjenigen der inneren Hülle ist.

7. Optisches Kabel, bestehend aus einem oder mehreren Kabelelementen nach Anspruch 1 bis 6, dadurch gekennzeichnet, daß es mit einer Außenumhüllung aus metallisch leitendem Material versehen ist.

8. Optisches Kabel, bestehend aus einem oder mehreren Kabelelementen nach Anspruch 1 bis 6, dadurch gekennzeichnet, daß es mit einer Außenumhüllung aus einem Flechtwerk nichtmetallischer Fäden oder Fasern versehen ist.

9. Optisches Kabel, bestehend aus einem oder mehreren Kabelelementen nach Anspruch 1 bis 6, dadurch gekennzeichnet, daß es mit einer Außenumhüllung versehen ist, die aus zwei konzentrischen Teilhüllen (6, 7) besteht, von denen die innere (6) aus nichtmetallischem Werkstoff besteht, dessen Elastizitätsmodul sehr viel größer ist als derjenige der Hülle (4) und der äußeren Teilhülle (7).

10. Optisches Kabel nach Anspruch 9, dadurch gekennzeichnet, daß das Material der inneren Teilhülle (6) aus einem Glasfaser-Kunststoff-Verbund (GFK), einem Kohlenstoff-Kunststoff-Verbund (CFK) oder aus einem Aramid-Faser-Harz-Verbund besteht, und daß diese Teilhülle (6) als in sich geschlossenes Rohr oder aus mehreren zylindrischen Stäben aufgebaut ist.

11. Optisches Kabel nach Anspruch 9, dadurch gekennzeichnet, daß zwischen den Teilhüllen (6, 7) bzw. zwischen ihnen und der Hülle (4) ein Flechtwerk aus nichtmetallischen Fäden oder Fasern angeordnet ist.

12. Verfahren zur Herstellung eines optischen Kabelelements, bei welchem um mindestens einen Lichtwellenleiter (LWL) (1, 1a, 1b) und dazu im wesentlichen parallel verlaufende zugfeste Fasern (2) eine Hülle (4) extrudiert wird, dadurch gekennzeichnet, daß ein oder mehrere Lichtwellenleiter (1, 1a, 1b) unverseilt und parallel verlaufend zusammen mit mehreren unverseilten und parallel verlaufenden Bündeln zugfester Fasern (2) einem Extruder (10) zugeführt werden, der diese Elemente mit einer konzentrischen Hülle (4) derart lose umgibt, daß der/die LWL (1, 1a, 1b) und die ihn/sie einbettenden zugfesten Fasern (2) den freien Innenquerschnitt der Hülle (4) zu 50 bis 90% ausfüllen und daß der/die LWL (1, 1a, 1b) gegenüber den einbettenden zugentlastenden Fasern (2) und die Fasern (2) in der Hülle (4) radial relativ frei beweglich sind, wobei der Durchmesser der zugfesten Fasern (2) derart gewählt ist, daß die freie Knicklänge des Bündels der zugfesten Fasern (2) kleiner als die der Gesamtheit des/der in der Hülle (4) verlaufenden LWL (1, 1a, 1b) ist, und wobei die Querschnittsfläche der Gesamtheit der zugfesten Fasern (2) wesentlich größer als die Querschnittsfläche der Gesamtheit des/der LWL (1, 1a, 1b) gewählt wird.

13. Verfahren nach Anspruch 12, dadurch gekennzeichnet, daß die zugfesten Fasern (2) unter Vorspannung verarbeitet werden.

**Revendications**

1. Elément de câble optique muni d'une gaine (4), dans laquelle s'étendent uniquement au moins un guide d'ondes lumineuses (1, 1a, 1b) et des fibres résistant à la traction (2) qui s'étendent d'une façon essentiellement parallèle aux guides d'ondes lumineuses (1, 1a, 1b), caractérisé en ce que (a) le (les) guide(s) d'ondes lumineuses (1, 1a, 1b) et les fibres résistant à la traction (2) qui l' (les) enrobent remplissent la section transversale intérieure de la gaine (4) jusqu'à 50 à 90% et l'enrobage du (des) guide(s) d'ondes optiques dans les fibres et les fibres dans la gaine s'effectue d'une façon tellement détachèe que le(s) guide(s) d'ondes lumineuses (1, 1a, 1b) est/sont assez librement mobiles dans la direction radiale, par rapport à la (aux) fibre(s) (2) de l'enrobage et les fibres (2) dans la gaine (4) (b) le diamètre des fibres résistant à la traction (2) est dimensionné de façon que la longueur de flambage libre du faisceau de fibres résistant à la traction (2) soit inférieure à celle de la totalité du (des) guide(s) d'ondes optiques (1, 1a, 1b) s'étendant dans la gaine (4) et (c) la surface de la section transversale de la totalité des fibres résistant à la traction (2) est essentiellement supérieure à la surface de la section transversale de la totalité du (des) guide(s) ondes optiques (1, 1a, 1b).

2. Elément de câble optique selon la revendication 1, caractérisé en ce que les guides d'ondes optiques séparés (1, 1a, 1b) présentent en outre chaque fois une couche protectrice secondaire mince fixée audit (auxdits) guide(s) d'ondes lumineuses.

3. Elément de câble optique selon la revendication 1 ou 2, caractérisé en ce que la longueur de flambage libre du faisceau de fibres résistant à la traction (2) est inférieure à 50% de celle de tous les guides d'ondes lumineuses utilisés (1, 1a, 1b).

4. Elément de câble optique selon l'une ou plusieurs des revendications 1 à 3, caractérisé en ce que les fibres résistant à la traction (2) sont en verre textile, aramide, carbone ou métal.

5. Elément de câble optique selon l'une ou plusieurs des revendications 1 à 4, caractérisé en ce que la gaine (4) est constituée par des couches différentes disposées de façon concentrique les unes par rapport aux autres.

6. Elément de câble optique selon la revendication 5, caractérisé en ce qu'une gaine dure intérieure en matériau synthétique est enveloppée d'un matériau dont le module d'élasticité est inférieur à 50% de celui de la gaine intérieure.

7. Câble optique constitué par un ou plusieurs éléments de câble selon les revendications 1 à 6, caractérisé en ce qu'il est muni d'une gaine extérieure en matériau métallique conducteur.

8. Câble optique constitué par un ou plusieurs éléments de câble selon la revendication 1 à 6, caractérisé en ce qu'il est muni d'une gaine extérieure constituée par une natte de fils ou fibres non métalliques.

9. Câble optique constitué par un ou plusieurs éléments de câble selon les revendications 1 à 6, caractérisé en ce qu'il est muni d'une gaine extérieure qui est constituée par deux gaines partielles concentriques (6, 7), dont la gaine intérieure (6) est constituée par de la matière première non métallique, dont le module d'élasticité est notablement supérieur à celui de la gaine (4) et de la gaine partielle extérieure (7).

10. Câble optique selon la revendication 9, caractérisé en ce que la matériau de la gaine partielle intérieure (6) est constitué par un combiné de matière synthétique-fibre de verre, un combiné de matière synthétique-carbone ou un combiné de résine-fibre-aramide, et que cette gaine partielle (6) est formée comme un tube fermé en soi ou par plusieurs barres cylindriques.

11. Câble optique selon la revendication 9, caractérisé en ce qu'entre les gaines partielles (6, 7) respectivement entre ces dernières et la gaine (4) est disposée une natte constituée par des fils ou fibres non métalliques.

12. Procédé pour la fabrication d'un élément de câble optique, selon lequel une gaine (4) est appliquée par extrusion autour d'au moins un guide d'ondes lumineuses (1, 1a, 1b) et des fibres résistant à la traction (2) qui s'étendent de façon essentiellement parallèle audit (auxdits) guide(s), caractérisé en ce qu'on ou plusieurs guides d'ondes lumineuses (1, 1a, 1b) est/sont amené(s) de façon non toronnée et parallèle avec plusieurs faisceaux non toronnés et parallèles de fibres résistant à la traction (2) à une extrudeuse (10) qui entoure ces éléments d'une gaine concentrique (4) d'une façon tellement détachée que le (les) guide(s) d'ondes lumineuses (1, 1a, 1b) et les fibres résistant à la traction (2) qui l' (les) enrobent remplissent la section transversale intérieure de la gaine (4) jusqu'à 50 à 90% et l'enrobage du (des) guides d'ondes optiques dans les fibres et les fibres dans la gaine s'effectue d'une façon tellement détachée que le(s) guide(s) d'ondes lumineuses (1, 1a, 1b) est/sont assez librement mobiles dans la direction radiale par rapport à la (aux) fibre(s) (2) de l'enrobage et les fibres (2) dans la gaine (4), le diamètre des fibres résistant à la traction (2) est choisi de façon que la longueur de flambage libre du faisceau de fibres résistant à la traction (2) soit inférieure à celle de la totalité du (des) guide(s) d'ondes optiques (1, 1a, 1b) s'étendant dans la gaine (4), et la surface de la section transversale de la totalité des fibres résistant à la traction (2) est essentiellement supérieure à la surface de la section transversale de la totalité du (des) guide(s) ondes optiques (1, 1a, 1b).

13. Procédé selon la revendication (12), caractérisé en ce que les fibres résistant à la traction (2) sont traitées sous une tension préalable.

**Claims**

1. An optical cable element having a sheath (4) in which exclusively at least one optical waveguide (OWG) (1, 1a, 1b) and tensile-resistant fibres (2) extending substantially parallel to said waveguide(s) (1, 1a, 1b) are accommodated, characterized in that (a) the OWG(s) (1, 1a, 1b) and the tensile-resistant fibres (2) embedding same fill the space within the sheath (4) to 50 to 90% and that the embedding of the OWG(s) in the fibres and of the fibres in the sheath occurs so loosely that the OWG(s) (1, 1a, 1b) can move comparatively freely relative to the embedding fibres (2) in the radial direction, and the fibres (2) can move comparatively freely in the sheath (4) in the radial direction, (b) the diameter of the tensile-resistant fibres (2) is dimensioned such that the free effective length of the bundle of tensile-resistant fibres (2) is smaller than that of (all) the OWG(s) (1, 1a, 1b) accommodated in the sheath (4), and (c) in that the cross-sectional area of all the tensile-resistant fibres (2) together is substantially larger than the cross-sectional area of all the OWG(s) (1, 1a, 1b).

2. An optical cable element as claimed in Claim 1, characterized in that the individual optical waveguides (1; 1a, 1b) additionally each comprise a thin secondary protecting coating which is rigidly connected to the optical waveguides.

3. An optical cable element as claimed in Claim 1 or 2, characterized in that the free effective length of the fibre bundle of the tensile-resistant fibres (2) is smaller than 50% of that of all the optical waveguides (1; 1a, 1b) used.

4. An optical cable element as claimed in one or more of the Claims 1 up to and including 3, characterized in that the tensile-resistant fibres (2) consist of textile glass, aramide, carbon or metal.

5. An optical cable element as claimed in one or more of the Claims 1 up to and including 4, characterized in that the sheath (4) consists of various layers provided concentrically with respect to each other.

6. An optical cable element as claimed in Claim 5, characterized in that an inner hard envelope layer of a synthetic material is surrounded by a material the modulus of elasticity of which is smaller than 50% of that of the inner envelope layer.

7. An optical cable comprising one or more cable elements as claimed in Claims 1 up to and including 6, characterized in that the optical cable is provided with an outer cover of a metallic conductive material.

8. An optical cable comprising one or more cable elements as claimed in Claims 1 up to and including 6, characterized in that the optical cable is provided with an outer cover of a braid of non-metallic wires or fibres.

9. An optical cable comprising one or more cable elements as claimed in Claims 1 up to and including 6, characterized in that the optical cable is provided with an outer cover consisting of two concentric envelope layers (6, 7) of which the inner one (6) consists of a non-metallic material the modulus of elasticity of which is very much larger than that of the sheath (4) and the outer envelope layer (7).

10. An optical cable as claimed in Claim 9, characterized in that the material of the inner envelope layer (6) consists of a glass fibre-synthetic resin composite (GFS), a carbon-synthetic resin composite (CFS) or an aramide fibre resin composite, and that the inner envelope layer (6) is constructed as a closed tube or from several cylindrical rods.

11. An optical cable as claimed in Claim 9, characterized in that a braid of non-metallic wires or fibres is provided between the envelope layers (6, 7) or between these layers and the sheath (4).

12. A method of manufacturing an optical cable element, in which by means of extrusion a sheath (4) is provided around at least one optical waveguide (OWG) (1, 1a, 1b) and tensile-resistant fibres (2) extending substantially parallel to said optical waveguide(s), characterized in that one or a plurality of unstranded and parallel extending optical waveguides (1, 1a, 1b) is/are supplied to an extrusion press (10) together with a plurality of unstranded and parallel extending bundles of tensile-resistant fibres (2), said extrusion press providing a concentric envelope so loosely around the elements that the OWG(s) (1, 1a, 1b) and the tensile-resistant fibres (2) embedding said OWG(s) fill the free space within the sheath for 50 to 90%, and in that the OWG(s) (1, 1a, 1b) are relatively freely movable with respect to the embedding strain-relief fibres (2) in the radial direction and the fibres (2) are relatively freely movable in the sheath (4) in the radial direction, the diameter of the tensile-resistant fibres (2) being selected such that the free effective length of the bundle of tensile-resistant fibres (2) is smaller than that of all the OWG(s) (1, 1a, 1b) accommodated in the sheath (4), and the cross-sectional area of all the tensile-resistant fibres (2) together being selected substantially larger than the cross-sectional area of (all) the OWG(s) (1, 1a, 1b).

13. A method as claimed in Claim 12, characterized in that the tensile-resistant fibres (2) are processed under a prestress.

Fig.1

Fig.2

Fig.3

Fig.4

Fig.5